# EUROPEAN PATENT APPLICATION

(11) **EP 3 220 087 A1**
(43) Date of publication of application: **20.09.2017**
(21) Application number: 15877892.8
(22) Date of filing: 17.08.2015
(51) Int. Cl.: F28C 3/06, C22B 3/00, C22B 23/00, F28C 3/12, F28C 3/14, F28D 5/02

(54) **COUNTERCURRENT TYPE DIRECT-HEATING HEAT EXCHANGER**

(30) Priority: 14.01.2015 JP 2015004800
(71) Applicant: Sumitomo Metal Mining Co., Ltd., Tokyo 105-8716 (JP)
(72) Inventor: NAKAI Osamu, Tokyo 105-8716 (JP); MATSUBARA Satoshi, Tokyo 105-8716 (JP); HIGUCHI Hirotaka, Tokyo 105-8716 (JP); KYODA Yoji, Tokyo 105-8716 (JP); SAKAMOTO Takashi, Tokyo 105-8716 (JP)
(74) Representative: Jones, Nicholas Andrew
(86) International application number: PCT/JP2015/072994
(87) International publication number: WO 2016/113940

(57) **Abstract**

To provide a countercurrent direct-heating heat exchanger achieving high heat exchange efficiency. A countercurrent direct-heating heat exchanger A exchanges heat by flowing a heating target fluid 1 and a heating medium 2 in opposite directions and making the heating target fluid 1 and the heating medium 2 contact each other directly. The countercurrent direct-heating heat exchanger A includes: a container 10; and one or a plurality of tilted plates 20 provided in the container 10 and each having a downstream edge portion 21 from which the heating target fluid 1 drops down. The downstream edge portion 21 of one, some, or all of the tilted plates 20 are each provided with a plurality of teeth 22. The heating target fluid 1 dropping down from the downstream edge portions 21 is cut with the teeth 22 to form strip-shaped gaps. As a result, an area of contact between the heating target fluid 1 and the heating medium 2 is increased to increase heat exchange efficiency.

## Description

### Technical Field

This invention relates to a countercurrent direct-heating heat exchanger. More specifically, this invention relates to a countercurrent direct-heating heat exchanger that exchanges heat by making a heating target fluid and a heating medium contact each other directly while flowing the heating target fluid into the heat exchanger from an upper part thereof and flowing the heating target fluid out of the heat exchanger from a lower part thereof, and simultaneously, flowing the heating medium into the heat exchanger from a lower part thereof and flowing the heating medium out of the heat exchanger from an upper part thereof.

### Background Art

High-temperature and pressure sulfuric acid leaching, which is high pressure acid leaching (HPAL) using sulfuric acid, is known as hydrometallurgy to recover a valuable metal such as nickel or cobalt, etc. from a low-grade nickel oxide ore represented by a limonite ore, etc.

Hydrometallurgy by means of high-temperature and pressure sulfuric acid leaching includes a pretreatment step and a high-temperature and pressure sulfuric acid leaching step. In the pretreatment step, a nickel oxide ore is crushed and sized to manufacture an ore slurry. In the high-temperature and pressure sulfuric acid leaching step, the ore slurry is charged into an autoclave and then leaching process is performed while a leaching condition such as a temperature or a pressure is selected, as necessary.

To maintain a high leaching rate, a temperature from about 200 to about 300°C is generally selected as a condition for leaching in the autoclave. Meanwhile, the ore slurry manufactured in the pretreatment step is placed at a temperature substantially the same as an outside air temperature. Hence, charging the ore slurry at this temperature as it is into the autoclave not only reduces a temperature in the autoclave to reduce a leaching rate but also causes an unstable temperature condition to make it difficult to produce stable leaching reaction. A responsive method having been employed is to make the temperature of the ore slurry approach a temperature in the autoclave by preheating the ore slurry and then charge the preheated ore slurry into the autoclave.

A horizontal rotary heating device (Patent Literature 1) and a multitubular circular-tube heat exchanger (Patent Literature 2) are known as devices for heating a raw material such as a slurry highly efficiently and stably, for example. In the horizontal rotary heating device of Patent Literature 1, a partition wall is provided in a circular cylindrical container mounted horizontally and a blow hole for vapor is provided in a surface of the partition wall. A raw material can be heated by being charged into the circular cylindrical container while the container is rotated. The multitubular circular-tube container of Patent Literature 2 is formed of a plurality of heat transfer tubes arranged vertically. A coal-water slurry can be heated by passing the coal-water slurry through the heat transfer tubes in a downward countercurrent flow and passing water vapor through the outer peripheries of the heat transfer tubes.

However, these devices generally have a problem in terms of high likelihood of a failure of a mechanical driving unit or complicated configurations of the devices resulting from indirect heating. Hence, these devices cannot be used suitably in a smelting plant where an ore raw material is to be treated in large quantities. Additionally, if an ore slurry is heated simply, the flowability of the ore slurry is reduced with evaporation of water in the ore slurry. This also causes a problem of failing to produce sufficient leaching reaction in the autoclave.

Then, in the smelting plant employing the aforementioned high-temperature and pressure sulfuric acid leaching, a countercurrent direct-heating heat exchanger is used as a preheating facility for an ore slurry (Patent Literature 3). The countercurrent direct-heating heat exchanger exchanges heat by making a heating target fluid and a heating medium contact each other directly while flowing the heating target fluid into the heat exchanger from an upper part thereof and flowing the heating target fluid out of the heat exchanger from a lower part thereof, and simultaneously, flowing the heating medium into the heat exchanger from a lower part thereof and flowing the heating medium out of the heat exchanger from an upper part thereof.

The countercurrent direct-heating heat exchanger does not require a mechanical driving unit such as a motor, for example. Thus, this heat exchanger is free from a problem due to a failure of the mechanical driving unit, etc., and can be used suitably as a preheating facility of the smelting plant. Additionally, the countercurrent direct-heating heat exchanger exchanges heat by flowing an ore slurry as a heating target fluid and water vapor as a heating medium in opposite directions and making the ore slurry and the water vapor contact each other directly. Thus, a moisture content in the ore slurry can be maintained during heating of the ore slurry. This makes it possible to maintain favorable flowability of the ore slurry, so that sufficient leaching reaction can be produced in the autoclave.

### Citation List

### Patent Literatures

Patent Literature 1: Japanese Patent Application Publication No. Hei 6-238160
Patent Literature 2: Japanese Patent Application Publication No. Hei 5-26429
Patent Literature 3: Japanese Patent Application Publication No. 2010-25455

### Summary of Invention

### Technical Problem

A nickel oxide ore to be used as a raw material in hydrometallurgy by means of the aforementioned high-temperature and pressure sulfuric acid leaching differs slightly between producing areas in terms of a chemical composition, a particle size distribution, etc. The present inventors have found that this slight difference changes the viscosity of an ore slurry manufactured in the pretreatment step and in some cases, increases the viscosity of the ore slurry. The viscosity of the ore slurry is increased for various reasons. If the particle size distribution of the nickel oxide ore as a raw material shifts to a smaller particle size, for example, the viscosity of the ore slurry is increased with the same solid concentration in the ore slurry.

The present inventors have also found that increase in the viscosity of the ore slurry reduces the heat exchange efficiency of the countercurrent direct-heating heat exchanger. If the heat exchange efficiency of the countercurrent direct-heating heat exchanger is low, the amount of water vapor should be increased or a large-size heat exchanger should be used for heating the ore slurry to an intended temperature. This causes a problem of increase in operating cost or facility cost.

In view of the aforementioned circumstances, this invention is intended to provide a countercurrent direct-heating heat exchanger achieving high heat exchange efficiency.

### Solution to Problem

A countercurrent direct-heating heat exchanger according to a first invention exchanges heat by flowing a heating target fluid and a heating medium in opposite directions and making the heating target fluid and the heating medium contact each other directly. The countercurrent direct-heating heat exchanger includes: a container; a heating target fluid inlet provided at an upper part of the container and from which the heating target fluid is supplied; a heating target fluid outlet provided at a lower part of the container and from which the heating target fluid is discharged; a heating medium inlet provided at a lower part of the container and from which the heating medium is supplied; a heating medium outlet provided at an upper part of the container and from which the heating medium is discharged; and one or a plurality of tilted plates provided in the container and each having a downstream edge portion from which the heating target fluid drops down. The downstream edge portion or the downstream edge portions of one, some, or all of the tilted plates are each provided with a plurality of teeth.

The countercurrent direct-heating heat exchanger according to a second invention is characterized in that, in the first invention, the downstream edge portion or the downstream edge portions of one, some, or all of the tilted plates are each formed into a sawtooth shape.

The countercurrent direct-heating heat exchanger according to a third invention is characterized in that, in the first invention, the downstream edge portion of a tilted plate out of the plurality of tilted plates and arranged in a top layer is provided with a plurality of teeth.

The countercurrent direct-heating heat exchanger according to a fourth invention is characterized in that, in the first invention, some of the plurality of tilted plates are a plurality of umbrella-shape distribution plates and the other of the plurality of tilted plates are a plurality of annular flow guide plates, the umbrella-shape distribution plates and the annular flow guide plates are arranged alternately, one above the other, with the respective centers being substantially aligned with each other, and the downstream edge portion or the downstream edge portions of one, some, or all of the umbrella-shape distribution plates are each provided with a plurality of teeth.

The countercurrent direct-heating heat exchanger according to a fifth invention is characterized in that, in the fourth invention, the downstream edge portion or the downstream edge portions of one, some, or all of the umbrella-shape distribution plates are each formed into a sawtooth shape.

The countercurrent direct-heating heat exchanger according to a sixth invention is characterized in that, in the fourth invention, the downstream edge portion of an umbrella-shape distribution plate out of the plurality of umbrella-shape distribution plates and arranged in a top layer is provided with a plurality of teeth.

The countercurrent direct-heating heat exchanger according to a seventh invention is characterized in that, in the first or fourth invention, some of the plurality of tilted plates are a plurality of umbrella-shape distribution plates and the other of the plurality of tilted plates are a plurality of annular flow guide plates, the umbrella-shape distribution plates and the annular flow guide plates are arranged alternately, one above the other, with the respective centers being substantially aligned with each other, and the downstream edge portion or the downstream edge portions of one, some, or all of the annular flow guide plates are each provided with a plurality of teeth.

The countercurrent direct-heating heat exchanger according to an eighth invention is characterized in that, in the seventh invention, the downstream edge portion or the downstream edge portions of one, some, or all of the annular flow guide plates are each formed into a sawtooth shape.

The countercurrent direct-heating heat exchanger according to a ninth invention is characterized in that, in the second, fifth, or eighth invention, the teeth forming the downstream edge portion in the sawtooth shape each have a depth from 20 to 30 mm.

The countercurrent direct-heating heat exchanger according to a tenth invention is characterized in that, in the first, second, third, fourth, fifth, sixth, seventh, eighth, or ninth invention, the heating target fluid has viscosity.

The countercurrent direct-heating heat exchanger according to an eleventh invention is characterized in that, in the first, second, third, fourth, fifth, sixth, seventh, eighth, or ninth invention, the heating target fluid is an ore slurry having a solid concentration of 20% by mass or more.

### Advantageous Effects of Invention

According to the first invention, the downstream edge portion of the tilted plate is provided with a plurality of teeth. Thus, the heating target fluid dropping down from the downstream edge portion is cut with the teeth to form strip-shaped gaps. As a result, an area of contact between the heating target fluid and the heating medium is increased to increase heat exchange efficiency.

According to the second invention, a large number of teeth can be provided by forming the downstream edge portion of the tilted plate into a sawtooth shape. This facilitates processing and achieves reduction in facility cost.

According to the third invention, the downstream edge portion of the tilted plate arranged in the top layer is provided with a plurality of teeth. Thus, strip-shaped gaps are formed in the heating target fluid of high viscosity for its low temperature to allow increase in an area of contact with the heating medium. This works effectively for increasing heat exchange efficiency.

According to the fourth invention, the downstream edge portion of the umbrella-shape distribution plate is provided with a plurality of teeth. Thus, the heating target fluid dropping down from the downstream edge portion is cut with the teeth to form strip-shaped gaps. As a result, an area of contact between the heating target fluid and the heating medium is increased to increase heat exchange efficiency.

According to the fifth invention, a large number of teeth can be provided by forming the downstream edge portion of the umbrella-shape distribution plate into a sawtooth shape. This facilitates processing and achieves reduction in facility cost.

According to the sixth invention, the downstream edge portion of the umbrella-shape distribution plate arranged in the top layer is provided with a plurality of teeth. Thus, strip-shaped gaps are formed in the heating target fluid of high viscosity for its low temperature to allow increase in an area of contact with the heating medium. This works effectively for increasing heat exchange efficiency.

According to the seventh invention, the downstream edge portion of the annular flow guide plate is provided with a plurality of teeth. Thus, the heating target fluid dropping down from the downstream edge portion is cut with the teeth to form strip-shaped gaps. As a result, an area of contact between the heating target fluid and the heating medium is increased to increase heat exchange efficiency.

According to the eighth invention, a large number of teeth can be provided by forming the downstream edge portion of the annular flow guide plate into a sawtooth shape. This facilitates processing and achieves reduction in facility cost.

According to the ninth invention, the teeth each have a depth of 20 mm or more. Thus, strip-shaped gaps can be formed by cutting the heating target fluid satisfactorily. The teeth each have a depth not exceeding 30 mm. Thus, an excessively large gap is not formed in the heating target fluid, causing no risk of reducing heat exchange efficiency.

According to the tenth invention, an area of contact with the heating medium can be increased by forming strip-shaped gaps in the heating target fluid with viscosity. This works effectively for increasing heat exchange efficiency.

According to the eleventh invention, the heating target fluid is an ore slurry having a solid concentration of 20% by mass or more and having viscosity. Thus, an area of contact with the heating medium can be increased by forming strip-shaped gaps in the heating target fluid with viscosity. This works effectively for increasing heat exchange efficiency.

### Brief Description of Drawings

Fig. 1 is a longitudinal sectional view of a countercurrent direct-heating heat exchanger A according to a first embodiment of this invention.
Fig. 2 is a sectional view taken along an arrow line II-II of Fig. 1
Fig. 3 is a sectional view taken along an arrow line III-III of Fig. 1. Hatching shows an umbrella-shape distribution plate 20.
Fig. 4 is a sectional view taken along an arrow line IV-IV of Fig. 1. Hatching shows an annular flow guide plate 30.
Fig. 5A and Fig. 5B are explanatory views of an ore slurry 1 dropping down from the umbrella-shape distribution plate 20. Fig. 5A shows a downstream edge portion 21 in a linear shape. Fig. 5B shows the downstream edge portion 21 in a sawtooth shape. Hatching shows the umbrella-shape distribution plate 20.
Fig. 6 is a plan view of the annular flow guide plate 30 of a countercurrent direct-heating heat exchanger according to a second embodiment of this invention.
Fig. 7 is a longitudinal sectional view of a countercurrent direct-heating heat exchanger C according to a third embodiment of this invention.
Fig. 8 is a sectional view taken along an arrow line VIII-VIII of Fig. 7. Hatching shows a tilted plate 40.
Fig. 9A, Fig 9B and Fig. 9C are explanatory views of the shape of the downstream edge portion 21. Hatching shows the umbrella-shape distribution plate 20.
Fig. 10 is an explanatory view of the umbrella-shape distribution plate 20 with three-dimensional teeth 22.
Fig. 11 is an entire process drawing of hydrometallurgy.

### Description of Embodiments

Embodiments of this invention will be described next by referring to the drawings.

### [First Embodiment]

### (Hydrometallurgy)

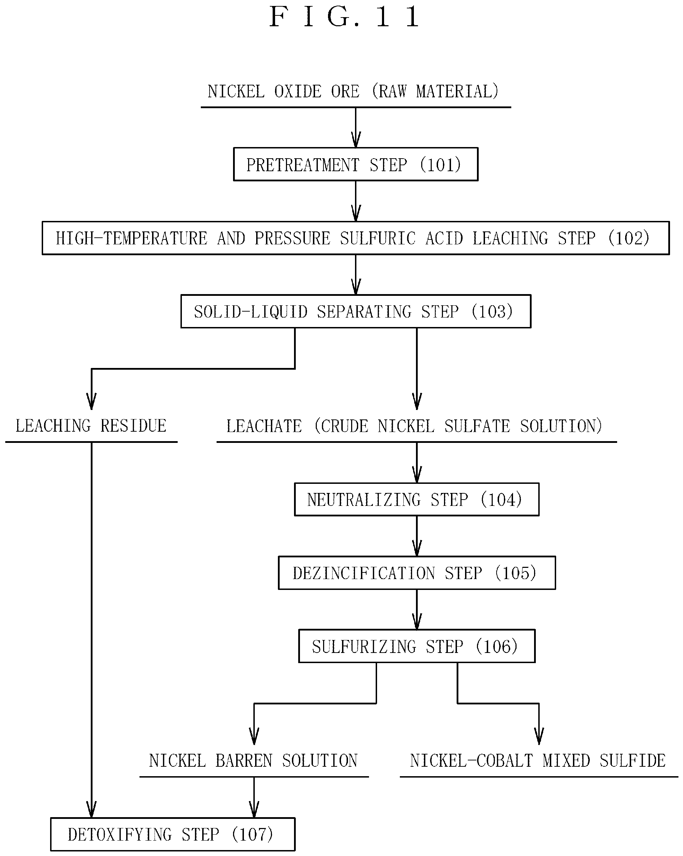

A countercurrent direct-heating heat exchanger A according to a first embodiment of this invention is used for hydrometallurgy to obtain nickel-cobalt mixed sulfide from a nickel oxide ore using high-temperature and pressure sulfuric acid leaching. As shown in Fig. 11, the hydrometallurgy includes a pretreatment step (101), a high-temperature and pressure sulfuric acid leaching step (102), a solid-liquid separating step (103), a neutralizing step (104), a dezincification step (105), a sulfurizing step (106), and a detoxifying step (107).

An ore to be used as a nickel oxide ore as a raw material is mainly what is called a laterite ore such as a limonite ore and a saprolite ore. A nickel content in the laterite ore is generally from 0.5 to 3.0% by mass. The laterite ore contains nickel in the form of hydroxide or siliceous magnesia (magnesium silicate). An iron content in the laterite ore is from 10 to 50% by mass. The laterite ore contains iron mainly in the form of trivalent hydroxide (goethite, FeOOH) and partially in the form of divalent iron as a magnesium silicate ore.

In the pretreatment step (101), the nickel oxide ore is crushed, classified into an average particle size of 2 mm or less, and slurried to manufacture an ore slurry. Redundant water in the ore slurry is removed using a solid-liquid separating device such as a thickener to concentrate the ore slurry so as to obtain a predetermined concentration of a solid in the ore slurry. In the high-temperature and pressure sulfuric acid leaching step (102), sulfuric acid is added to the ore slurry obtained in the pretreatment step (101). Then, the ore slurry is agitated under a temperature condition from 200 to 300°C for high-temperature and pressure acid leaching, thereby obtaining a leached slurry. In the solid-liquid separating step (103), the leached slurry obtained in the high-temperature and pressure sulfuric acid leaching step (102) is separated into a solid and a liquid to obtain a leachate containing nickel and cobalt (hereinafter called a "crude nickel sulfate solution") and a leaching residue.

In the neutralizing step (104), the crude nickel sulfate solution obtained in the solid-liquid separating step (103) is neutralized. In the dezincification step (105), hydrogen sulfide gas is added to the crude nickel sulfate solution neutralized in the neutralizing step (104) to remove zinc as a precipitate of zinc sulfide. In the sulfurizing step (106), hydrogen sulfide gas is added to liquid resulting from the dezincification obtained in the dezincification step (105) to obtain nickel-cobalt mixed sulfide and nickel barren solution. In the detoxifying step (107), the leaching residue generated in the solid-liquid separating step (103) and the nickel barren solution generated in the sulfurizing step (106) are detoxified.

A solid concentration in the ore slurry (weight ratio of a solid (ore) in the slurry) manufactured in the pretreatment step (101) depends largely on the properties of the nickel oxide ore as a raw material. Although not particularly limited, the concentration of a solid in the ore slurry is controlled in such a manner that the solid represents from 20 to 50% by mass. If a solid concentration in the ore slurry is less than 20% by mass, a large facility should be prepared for obtaining given time of stay during leaching and the amount of acid to be added should be increased for adjusting a residual acid concentration. Additionally, a nickel concentration in a resultant leachate is reduced. By contrast, if a solid concentration in the ore slurry exceeds 50% by mass, the scale of a facility can be reduced. However, such a solid concentration increases the viscosity of the ore slurry to make it difficult to carry the ore slurry due to blockage of a carrier pipe or large energy required for carrying the ore slurry.

The high-temperature and pressure sulfuric acid leaching step (102) includes two sub-steps (a preheating step and a leaching step). In the preheating step, the ore slurry at a temperature about an outside air temperature carried from the pretreatment step (101) is preheated to make the temperature of the ore slurry approach a temperature in an autoclave to be used in the leaching step. In the leaching step, the ore slurry carried from the preheating step is charged into the autoclave. Then, leaching proceeds by adding sulfuric acid to the ore slurry and blowing high-pressure air and high-pressure water vapor into the autoclave.

The countercurrent direct-heating heat exchanger A according to this embodiment is used for heating the ore slurry in the preheating step. If necessary, two or more countercurrent direct-heating heat exchangers A are connected in series and the ore slurry is heated in stages.

To maintain a moisture content in the ore slurry, the countercurrent direct-heating heat exchanger A uses water vapor as a heating medium. Water vapor to be used may be generated by using a common method such as a boiler. For discharge of a leached slurry from the autoclave, pressure is reduced in stages using a pressure reducing container. Water vapor generated in this pressure reducing container may be collected and used as a heating medium in the countercurrent direct-heating heat exchanger A.

### (Countercurrent Direct-Heating Heat Exchanger A)

The countercurrent direct-heating heat exchanger A according to this embodiment will be described next.

The countercurrent direct-heating heat exchanger A is a heat exchanger that exchanges heat by flowing a heating target fluid 1 and a heating medium 2 in opposite directions and making the heating target fluid 1 and the heating medium 2 contact each other directly. In this embodiment, the heating target fluid 1 is an ore slurry 1 obtained in the pretreatment step (101) of the aforementioned hydrometallurgy and the heating medium 2 is water vapor 2.

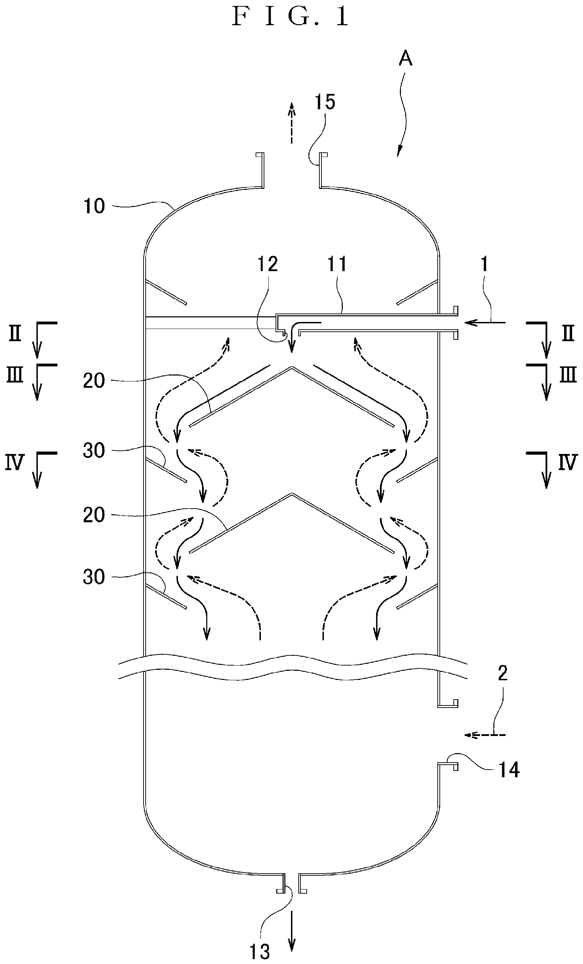

As shown in Fig. 1, the countercurrent direct-heating heat exchanger A includes a substantially circular cylindrical container 10. The container 10 is arranged vertically in such a manner that the center axis of the container 10 extends in a substantially vertical direction.

The container 10 is provided with a supply pipe 11 arranged horizontally at an upper part of the container 10. The supply pipe 11 is provided with a heating target fluid inlet 12 arranged to be pointed downwardly. The container 10 is provided with a heating target fluid outlet 13 arranged at a lower part, more specifically, at the bottom of the container 10. The ore slurry 1 as the heating target fluid 1 is supplied from the heating target fluid inlet 12 into the container 10 through the supply pipe 11. The supplied ore slurry 1 flows down in the container 10 and is then discharged to the outside of the container 10 from the heating target fluid outlet 13. Solid arrows of Fig. 1 show a flow of the ore slurry 1.

The container 10 is provided with a heating medium inlet 14 arranged at a lower side wall of the container 10. The container 10 is provided with a heating medium outlet 15 arranged at an upper part, more specifically, at the top of the container 10. The water vapor 2 as the heating medium 2 is supplied from the heating medium inlet 14 into the container 10. The supplied water vapor 2 moves up in the container 10 and is then discharged to the outside of the container 10 from the heating medium outlet 15. Dashed arrows of Fig. 1 show a flow of the water vapor 2.

The container 10 is provided with a plurality of umbrella-shape distribution plates 20 and a plurality of annular flow guide plates 30. The umbrella-shape distribution plates 20 and the annular flow guide plates 30 are arranged alternately, one above the other, with the respective centers being substantially aligned with each other. These umbrella-shape distribution plates 20 and these annular flow guide plates 30 each have a tilted surface. The ore slurry 1 supplied into the container 10 flows down along the respective tilted surfaces of the umbrella-shape distribution plates 20 and those of the annular flow guide plates 30 to drop down from downstream edge portions of the tilted surfaces. By making this flow repeatedly, the ore slurry 1 flows down in the container 10. Meanwhile, the water vapor 2 supplied into the container 10 moves up in the container 10 while passing through between the umbrella-shape distribution plates 20 and the annular flow guide plates 30 in a zigzag fashion.

The umbrella-shape distribution plates 20 and the annular flow guide plates 30 both correspond to a "tilted plate" recited in the appended claims. In other words, the countercurrent direct-heating heat exchanger A includes a plurality of tilted plates 20 and 30. Some of these tilted plates 20 and 30 are a plurality of umbrella-shape distribution plates 20 and the other of these tilted plates 20 and 30 are a plurality of annular flow guide plates 30.

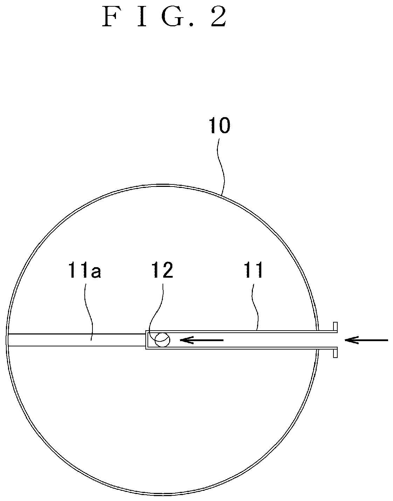

As shown in Fig. 2, in a plan view, the supply pipe 11 is arranged to extend in the direction of the diameter of the container 10 from the side wall to the substantially central point of the container 10. The heating target fluid inlet 12 is formed at an end portion of the supply pipe 11. The heating target fluid inlet 12 is arranged at the substantially central point of the container 10 in a plan view. The supply pipe 11 is supported by a beam 11 a extending linearly from the end portion of the supply pipe 11 to the side wall of the container 10.

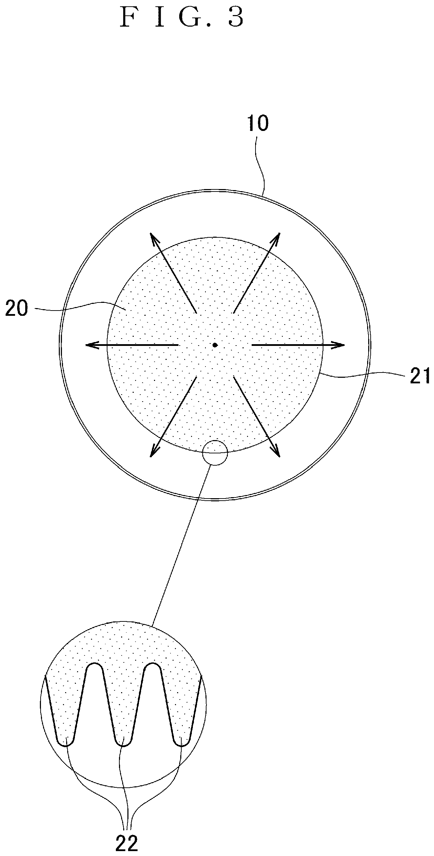

As shown in Figs. 1 and 3, the umbrella-shape distribution plate 20 is a tilted plate having an umbrella shape (conical shape). The umbrella-shape distribution plate 20 is arranged in such a manner that the top of the umbrella-shape distribution plate 20 is pointed upwardly and the top (center) substantially agrees with the center of the container 10 in a plan view. Specifically, the top of the umbrella-shape distribution plate 20 is arranged directly below the heating target fluid inlet 12. Thus, the ore slurry 1 is supplied from the heating target fluid inlet 12 to the top of the umbrella-shape distribution plate 20 in a top layer, distributed radially along the tilted surface of the umbrella-shape distribution plate 20, and drops down in a skirt-like fashion from a downstream edge portion 21. The downstream edge portion 21 of the umbrella-shape distribution plate 20 is an edge where the side surface and the bottom surface of a cone contact each other.

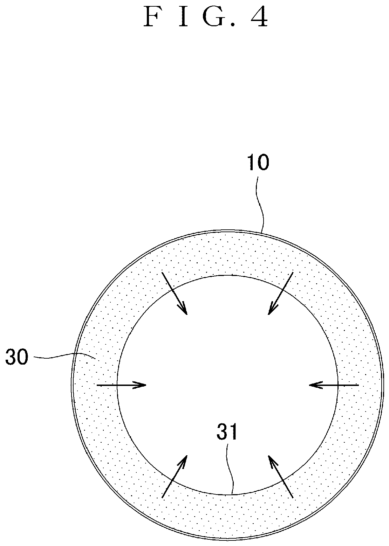

As shown in Figs. 1 and 4, the annular flow guide plate 30 is an annular tilted plate having a slope descending from the outer peripheral edge toward the inner peripheral edge of the annular flow guide plate 30. The outer diameter of the annular flow guide plate 30 is substantially the same as the inner diameter of the container 10. The outer peripheral edge of the annular flow guide plate 30 contacts the inner wall of the container 10. The annular flow guide plate 30 is arranged in such a manner that the center of the annular flow guide plate 30 (the respective centers of the outer periphery and the inner periphery) substantially agrees with the center of the container 10 in a plan view. After dropping down from the umbrella-shape distribution plate 20 to the annular flow guide plate 30, the ore slurry 1 flows down along the tilted surface toward the center of the annular flow guide plate 30 and then drops down in a skirt-like fashion from a downstream edge portion 31. The downstream edge portion 31 of the annular flow guide plate 30 is the inner peripheral edge thereof.

### (Heat Exchange by Countercurrent Direct-Heating Heat Exchanger A)

Heat exchange by the countercurrent direct-heating heat exchanger A will be described next.

The ore slurry 1 is supplied into the container 10 from the heating target fluid inlet 12. The ore slurry 1 supplied into the container 10 first flows down radially along the tilted surface of the umbrella-shape distribution plate 20 in the top layer and then drops down in a skirt-like fashion from the downstream edge portion 21. After dropping down from the umbrella-shape distribution plate 20 to the annular flow guide plate 30, the ore slurry 1 flows down along the tilted surface toward the center of the annular flow guide plate 30 and then drops down in a skirt-like fashion from the downstream edge portion 31. Then, the ore slurry 1 drops down to the umbrella-shape distribution plate 20 in a subsequent layer. In this way, the ore slurry 1 flows down along the respective tilted surfaces of the umbrella-shape distribution plate 20 and the annular flow guide plate 30 alternately and is then discharged to the outside of the container 10 from the heating target fluid outlet 13 at the lower part of the container 10.

The water vapor 2 is supplied into the container 10 from the heating medium inlet 14 at the lower part of the container 10, moves up while passing through between the umbrella-shape distribution plate 20 and the annular flow guide plate 30 in a zigzag fashion, and is then discharged to the outside of the container 10 from the heating medium outlet 15 at the upper part of the container 10. During this flow, the water vapor 2 contacts the ore slurry 1 directly by flowing along the ore slurry 1 while the ore slurry 1 flows down along the respective tilted surfaces of the umbrella-shape distribution plate 20 and the annular flow guide plate 30. The water vapor 2 also contacts the ore slurry 1 directly by passing through the ore slurry 1 while the ore slurry 1 drops down from the downstream edge portions 21 and 31 of the umbrella-shape distribution plate 20 and the annular flow guide plate 30 respectively. In this way, heat is exchanged between the ore slurry 1 and the water vapor 2.

As described above, the countercurrent direct-heating heat exchanger A exchanges heat by making the ore slurry 1 and the water vapor 2 contact each other directly while flowing the ore slurry 1 into the heat exchanger A from an upper part thereof and flowing the ore slurry 1 out of the heat exchanger A from a lower part thereof, and simultaneously, flowing the water vapor 2 into the heat exchanger A from a lower part thereof and flowing the water vapor 2 out of the heat exchanger A from an upper part thereof.

The ore slurry 1 is distributed radially along the umbrella-shape distribution plate 20. This increases an area of contact between the ore slurry 1 and the water vapor 2 to increase heat exchange efficiency. Further, the flow of the water vapor 2 is guided along the annular flow guide plate 30 and the water vapor 2 flows along the ore slurry 1 while the ore slurry 1 flows down along the tilted surface of the umbrella-shape distribution plate 20. This also increases an area of contact between the ore slurry 1 and the water vapor 2 to increase heat exchange efficiency.

### (Umbrella-Shape Distribution Plate 20)

The umbrella-shape distribution plate 20 as a characteristic element of this embodiment will be described next in detail.

As shown in Fig. 3, the downstream edge portion 21 of the umbrella-shape distribution plate 20 arranged in the top layer is formed into a sawtooth shape as a whole. More specifically, the downstream edge portion 21 is formed into a sawtooth shape formed of a large number of continuous triangular teeth 22 with rounded corners. In other words, the downstream edge portion 21 is provided with a plurality of triangular teeth 22 with rounded corners and the teeth 22 define the downstream edge portion 21 in a sawtooth shape. The downstream edge portion 21 of the umbrella-shape distribution plate 20 can be formed into a sawtooth shape by cutting out triangles at certain intervals from the downstream edge portion 21 in a linear shape and defining the residual portions as the teeth 22.

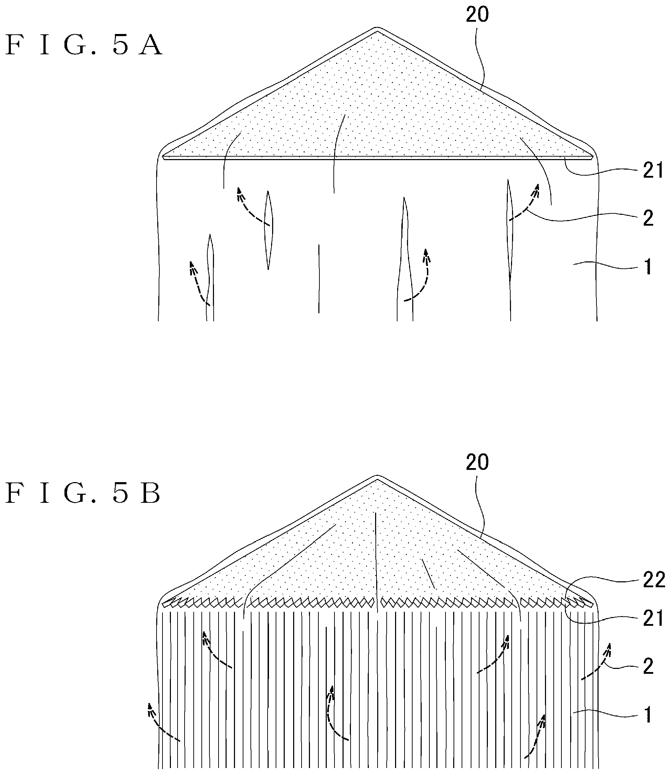

As shown in Fig. 5A, if the downstream edge portion 21 of the umbrella-shape distribution plate 20 has a linear shape, the ore slurry 1 drops down from the downstream edge portion 21 in a planar shape to make the water vapor 2 pass through holes generated in places of the ore slurry 1 in the planar shape. Hence, a pathway of the water vapor 2 is concentrated in the holes of the ore slurry 1 to heat the ore slurry 1 more intensively in areas near the holes than in the other areas. Specifically, nonuniform heating of the ore slurry 1 occurs. This phenomenon occurs more noticeably with increase in the viscosity of the ore slurry 1.

By contrast, if the downstream edge portion 21 of the umbrella-shape distribution plate 20 has a sawtooth shape as shown in Fig. 5B, the ore slurry 1 dropping down from the downstream edge portion 21 is cut with the large number of teeth 22 to form a large number of strip-shaped gaps. The water vapor 2 is to pass through the strip-shaped gaps in the ore slurry 1. This increases an area of contact between the ore slurry 1 and the water vapor 2 to increase the heat exchange efficiency of the countercurrent direct-heating heat exchanger A. Formation of the large number of strip-shaped gaps in the ore slurry 1 also works to distribute a pathway of the water vapor 2 uniformly, so that the ore slurry 1 can be heated uniformly. The presence or absence of the teeth 22 changes a way in which the ore slurry 1 exists more largely with a higher viscosity of the ore slurry 1, thereby working more effectively for increasing heat exchange efficiency.

Forming the downstream edge portion 21 into a sawtooth shape may be applied to one, some, or all of the plurality of umbrella-shape distribution plates 20. A larger number of the umbrella-shape distribution plates 20 having the downstream edge portions 21 of a sawtooth shape works more effectively for increasing heat exchange efficiency.

The arrangement of the umbrella-shape distribution plate 20 having the downstream edge portion 21 of a sawtooth shape is not particularly limited. However, arranging this umbrella-shape distribution plate 20 in an upper layer works more effectively for increasing heat exchange efficiency than arranging the same in a lower layer. Forming the downstream edge portion 21 of the umbrella-shape distribution plate 20 in the top layer into a sawtooth shape, as in this embodiment, works particularly effectively for increasing heat exchange efficiency for the following reason.

The ore slurry 1 is supplied from the upper part of the container 10, heated, and then discharged from the lower part of the container 10. Thus, the temperature of the ore slurry 1 is low and the viscosity thereof is high accordingly at the upper part of the container 10. Further, a moisture content in the ore slurry 1 increases gradually as the ore slurry 1 contacts the water vapor 2 directly. Conversely, at the time immediately after supply of the ore slurry 1, the viscosity of the ore slurry 1 is high for its low moisture content. For this reason, the viscosity of the ore slurry 1 is higher at the upper part of the container 10 (at the time immediately after supply).

As described above, higher viscosity of the ore slurry 1 works more effectively for increasing heat exchange efficiency. Thus, by forming the downstream edge portion 21 into a sawtooth shape for the umbrella-shape distribution plate 20 in an upper layer, particularly for the umbrella-shape distribution plate 20 in the top layer to receive the high-viscosity ore slurry 1, strip-shaped gaps can be formed in the high-viscosity ore slurry 1 to achieve increase in an area of contact with the water vapor 2. This works effectively for increasing heat exchange efficiency.

Additionally, the number of the umbrella-shape distribution plates 20 having the downstream edge portions 21 of a sawtooth shape can be reduced. This achieves reduction in cost for processing the umbrella-shape distribution plate 20 and reduction in facility cost.

In the preheating step of the aforementioned hydrometallurgy, two or more countercurrent direct-heating heat exchangers A may be connected in series to heat the ore slurry 1 in stages. In this case, a high degree of effectiveness is achieved by applying the aforementioned configuration, particularly to the countercurrent direct-heating heat exchanger A in a first stage.

### [Second Embodiment]

In the above-described first embodiment, the downstream edge portion 21 of the umbrella-shape distribution plate 20 is formed into a sawtooth shape. In addition, or alternatively, the downstream edge portion 31 of the annular flow guide plate 30 may be formed into a sawtooth shape.

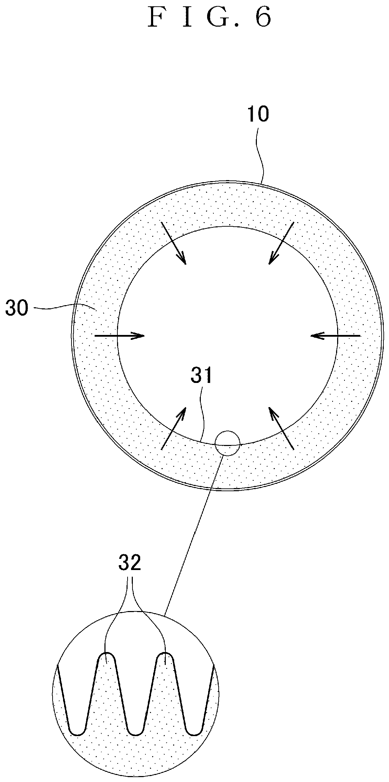

As shown in Fig. 6, the downstream edge portion 31 of the annular flow guide plate 30 according to this embodiment is formed into a sawtooth shape as a whole. More specifically, the downstream edge portion 31 is formed into a sawtooth shape formed of a large number of continuous triangular teeth 32 with rounded corners. In other words, the downstream edge portion 31 is provided with a plurality of triangular teeth 32 with rounded corners and the teeth 32 define the downstream edge portion 31 in a sawtooth shape. The downstream edge portion 31 of the annular flow guide plate 30 can be formed into a sawtooth shape by cutting out triangles at certain intervals from the downstream edge portion 31 in a linear shape and defining the residual portions as the teeth 32.

Forming the downstream edge portion 31 of the annular flow guide plate 30 into a sawtooth shape increases an area of contact between the ore slurry 1 and the water vapor 2 to increase heat exchange efficiency and achieves uniform heating of the ore slurry 1, for the same reason as that for forming the downstream edge portion 21 of the umbrella-shape distribution plate 20 into a sawtooth shape.

Forming the downstream edge portion 31 into a sawtooth shape may be applied to one, some, or all of the plurality of annular flow guide plates 30. A larger number of the annular flow guide plates 30 having the downstream edge portions 31 of a sawtooth shape works more effectively for increasing heat exchange efficiency. The arrangement of the annular flow guide plate 30 having the downstream edge portion 31 of a sawtooth shape is not particularly limited. However, arranging this annular flow guide plate 30 in an upper layer works more effectively for increasing heat exchange efficiency than arranging the same in a lower layer.

Both the downstream edge portion 21 and the downstream edge portion 31 of the umbrella-shape distribution plate 20 and the annular flow guide plate 30 respectively may be formed into a sawtooth shape. Alternatively, one of the downstream edge portion 21 and the downstream edge portion 31 of the umbrella-shape distribution plate 20 and the annular flow guide plate 30 respectively may be formed into a sawtooth shape.

### [Third Embodiment]

A countercurrent direct-heating heat exchanger C according to a third embodiment of this invention will be described next.

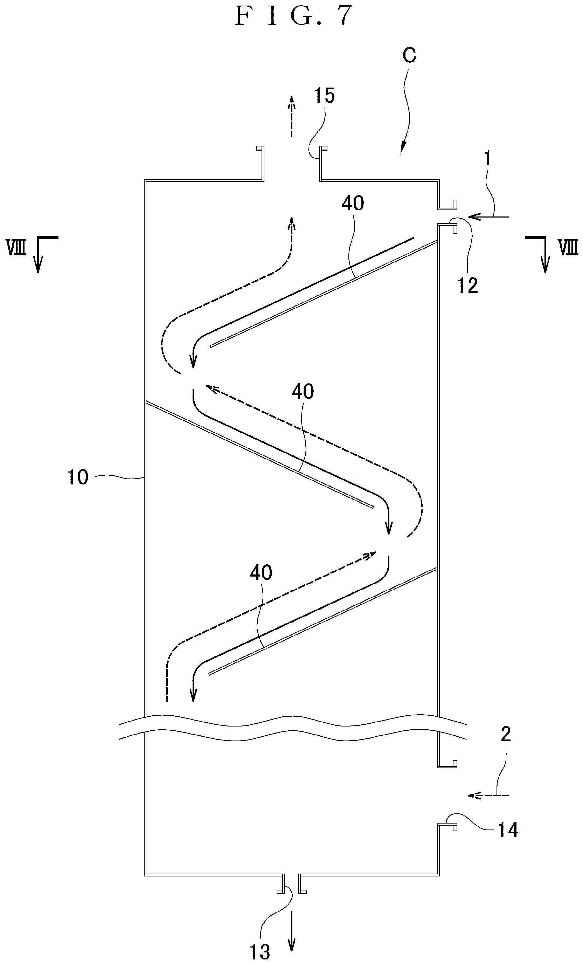

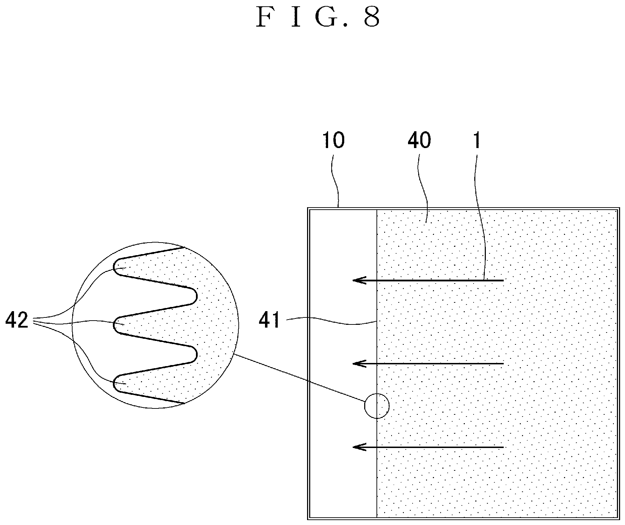

As shown in Figs. 7 and 8, the countercurrent direct-heating heat exchanger C includes a substantially square cylindrical container 10. The container 10 is arranged vertically in such a manner that the center axis of the container 10 extends in a substantially vertical direction. The shape of the container 10 is not particularly limited but is required only to allow a heating target fluid 1 and a heating medium 2 to flow in opposite directions in the container 10. The container 10 may have a circular cylindrical shape (the first embodiment) or a square cylindrical shape (the third embodiment).

The container 10 is provided with a heating target fluid inlet 12 arranged at an upper side wall of the container 10. The container 10 is provided with a heating target fluid outlet 13 arranged at a lower part, more specifically, at the bottom of the container 10. The heating target fluid 1 is supplied from the heating target fluid inlet 12 into the container 10. The supplied heating target fluid 1 flows down in the container 10 and is then discharged to the outside of the container 10 from the heating target fluid outlet 13. Solid arrows of Fig. 7 show a flow of the heating target fluid 1.

The container 10 is provided with a heating medium inlet 14 arranged at a lower side wall of the container 10. The container 10 is provided with a heating medium outlet 15 arranged at an upper part, more specifically, at the top of the container 10. The heating medium 2 is supplied from the heating medium inlet 14 into the container 10. The supplied heating medium 2 moves up in the container 10 and is then discharged to the outside of the container 10 from the heating medium outlet 15. Dashed arrows of Fig. 7 show a flow of the heating medium 2.

The container 10 is provided with a plurality of tilted plates 40. The tilted plates 40 are each a rectangular plate member having a slope. The tilted plate 40 contacts the inner wall of the container 10 at an upstream end portion and opposite lateral portions of the tilted plate 40. Space is formed between a downstream edge portion 41 of the tilted plate 40 and the inner wall of the container 10. The tilted plates 40 having slopes pointed in opposite directions are arranged in the container 10, one above the other, in a staggered pattern.

The heating target fluid 1 supplied into the container 10 flows down along a surface of the tilted plate 40 to drop down from the downstream edge portion 41. Then, the heating target fluid 1 is supplied to the tilted plate 40 in a lower layer. By making this flow repeatedly, the heating target fluid 1 flows down in the container 10 in a zigzag fashion. On the other hand, the heating medium 2 supplied into the container 10 moves up in the container 10 while passing through between the tilted plates 40 in a zigzag fashion.

The shape of the tilted plate 40 is not limited to the shape of the umbrella-shape distribution plate 20 or the shape of the annular flow guide plate 30 according to the first embodiment. Like in this embodiment, the tilted plate 40 may simply have a plate-like shape or a different shape. The tilted plate 40 is only required to be provided to have a slope along which the heating target fluid 1 is to flow down and to allow the heating target fluid 1 to drop down from the downstream edge portion 41 of the tilted plate 40. The downstream edge portion 41 of the tilted plate 40 is a downstream edge of the slope.

Providing a plurality of the tilted plates 40 is preferable as it extends a channel of the heating target fluid 1 further to increase an area of contact with the heating medium 2. However, the number of the tilted plates 40 is not particularly limited. One tilted plate 40, or two or more tilted plates 40 may be provided.

As shown in Fig. 8, the downstream edge portion 41 of the tilted plate 40 arranged in a top layer is formed into a sawtooth shape as a whole. More specifically, the downstream edge portion 41 is formed into a sawtooth shape formed of a large number of continuous triangular teeth 42 with rounded corners. In other words, the downstream edge portion 41 is provided with a plurality of triangular teeth 42 with rounded corners and the teeth 42 define the downstream edge portion 41 in a sawtooth shape. The downstream edge portion 41 of the tilted plate 40 can be formed into a sawtooth shape by cutting out triangles at certain intervals from the downstream edge portion 41 in a linear shape and defining the residual portions as the teeth 42.

Forming the downstream edge portion 41 of the tilted plate 40 according to this embodiment into a sawtooth shape increases an area of contact between the heating target fluid 1 and the heating medium 2 to increase heat exchange efficiency and achieves uniform heating of the heating target fluid 1, for the same reason as that for forming the downstream edge portion 21 of the umbrella-shape distribution plate 20 into a sawtooth shape.

Forming the downstream edge portion 41 into a sawtooth shape may be applied to one, some, or all of the plurality of tilted plates 40. As the number of the tilted plates 40 having the downstream edge portions 41 having a sawtooth shape increases, the heat exchange efficiency increases more effectively. Further, the arrangement of the tilted plate 40 having the downstream edge portion 41 of a sawtooth shape is not particularly limited. However, arranging this tilted plate 40 in an upper layer works more effectively for increasing heat exchange efficiency than arranging the same in a lower layer. Forming the downstream edge portion 41 of the tilted plate 40 in the top layer into a sawtooth shape works particularly effectively for increasing heat exchange efficiency.

### [Other Embodiments]

### (Sawtooth Shape of Downstream Edge Portion)

The sawtooth shape of each of the downstream edge portions 21, 31, and 41 of the umbrella-shape distribution plate 20, the annular flow guide plate 30, and the tilted plate 40 respectively is not particularly limited but various shapes are applicable as this sawtooth shape.

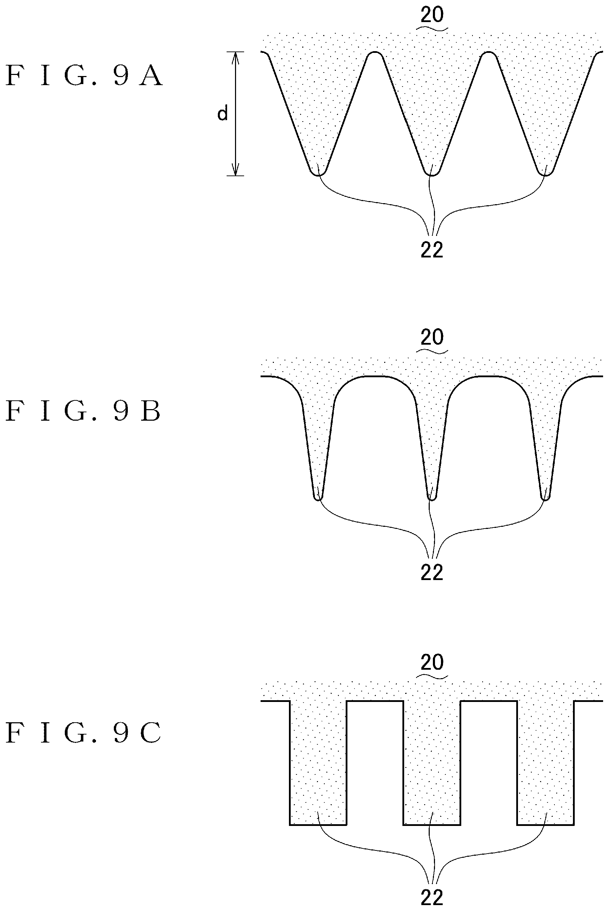

As shown in Fig. 9A, the downstream edge portion 21 of the umbrella-shape distribution plate 20 may be formed into a triangular wave shape formed of a large number of continuous triangular teeth 22 with rounded corners. In this case, the shape of the tooth 22 may be a bilaterally-symmetric isosceles triangle, with the vertex angle set at 45 degrees.

If the heating target fluid 1 is the ore slurry 1, the depth d of the tooth 22 is preferably from 20 to 30 mm, more preferably, 25 mm. With the depth d of the tooth 22 at 20 mm or more, strip-shaped gaps can be formed by cutting the ore slurry 1 satisfactorily. If the depth d of the tooth 22 is too large, excessively large gaps are formed in the ore slurry 1. In this case, the water vapor 2 passes through the ore slurry 1 while part of the water vapor 2 does not contact the ore slurry 1 sufficiently, causing the risk of reducing heat exchange efficiency. If the depth d of the tooth 22 is 30 mm or less, excessively large gaps are not formed in the ore slurry 1, causing no risk of reducing heat exchange efficiency.

As shown in Fig. 9B, the tooth 22 may be sharpened more at the tip. As shown in Fig. 9C, the downstream edge portion 21 of the umbrella-shape distribution plate 20 may be formed into a rectangular wave shape formed of a large number of continuous rectangular teeth 22.

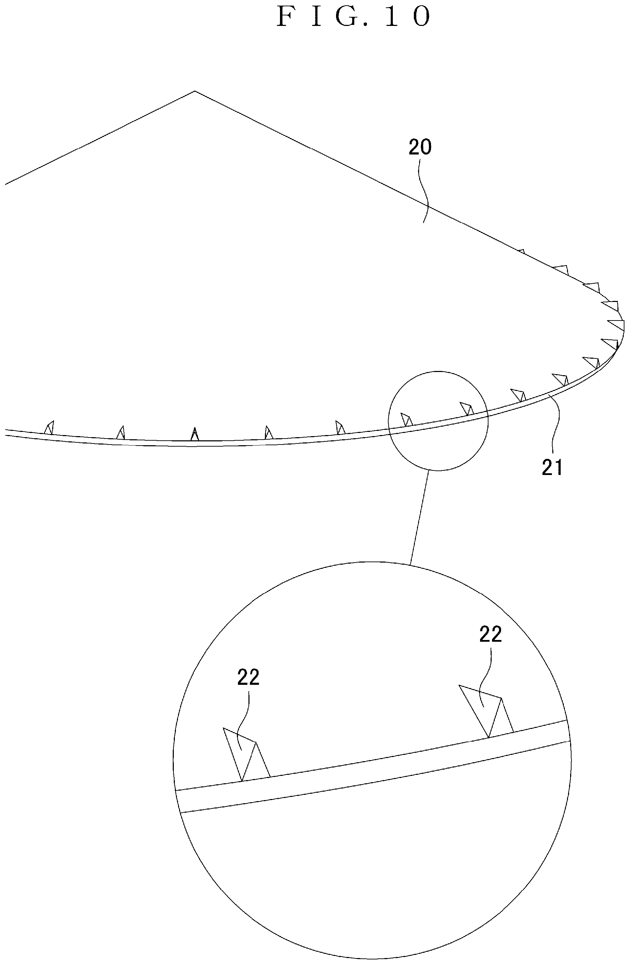

As shown in Fig. 10, instead of forming the downstream edge portion 21 of the umbrella-shape distribution plate 20 into a sawtooth shape, a plurality of three-dimensional teeth 22 may be provided on a surface of the downstream edge portion 21. For example, the teeth 22 having a triangular pyramid shape may be arranged in such a manner that the apex of the tooth 22 is pointed to the apex of the umbrella-shape distribution plate 20

In short, it is sufficient if a plurality of teeth 22 usable for cutting the heating target fluid 1 are provided on the downstream edge portion 21. The teeth 22 may have a planar shape (see Fig. 9A, Fig. 9B and Fig. 9C) or a three-dimensional shape (see Fig. 10).

Meanwhile, forming the downstream edge portion 21 into a sawtooth shape makes it possible to provide a large number of planar teeth 22. This facilitates processing and achieves reduction in facility cost, compared to providing a large number of three-dimensional teeth 22.

The description given above is about the umbrella-shape distribution plate 20. Various shapes are also applicable as the shapes of the downstream edge portions 21 and 31 of the annular flow guide plate 30 and the tilted plate 40 respectively.

### (Heating Target Fluid 1)

The heating target fluid 1 is not particularly limited but is required only to be a heating target having flowability. For example, the heating target fluid 1 may be liquid with flowability in the form of a slurry containing a solid component. The liquid with flowability in the form of a slurry may be a slurry (ore slurry) containing an ore. The ore slurry may be a slurry containing a nickel oxide ore obtained in the pretreatment step (101) of the aforementioned hydrometallurgy, for example.

If the heating target fluid 1 is a fluid having viscosity, an area of contact with the heating medium 2 can be increased by forming strip-shaped gaps in the heating target fluid 1 with viscosity. This works effectively for increasing heat exchange efficiency. The fluid with viscosity may be an ore slurry having a solid concentration of 20% by mass or more. In particular, an ore slurry having a solid concentration exceeding 40% by mass has high viscosity, thereby working effectively for increasing heat exchange efficiency. An upper limit of a solid concentration in an ore slurry is generally set at 50% by mass in terms of facilitating carriage of the ore slurry.

### (Heating Medium 2)

The heating medium 2 is not particularly limited but is required only to be a medium to supply heat to the heating target fluid 1. The heating medium 2 may be gas such as water vapor.

### Examples

### Examples will be described next.

### (Common Condition)

A condition common to Working Examples 1 to 3 and Comparative Examples 1 and 2 described below is as follows.

In the preheating step of the aforementioned hydrometallurgy, an ore slurry was heated using a countercurrent direct-heating heat exchanger. The basic configuration of this countercurrent direct-heating heat exchanger is the same as that of the countercurrent direct-heating heat exchanger A according to the first embodiment (see Fig. 1).

The following describes the configuration of the countercurrent direct-heating heat exchanger in detail.
Dimensions of container 10: 4,500 mm in inner diameter, 14,300 mm in height
Material of side wall of container 10: clad steel containing an inner part made of titanium having a thickness of 9 mm and an outer part made of carbon steel having a thickness of 23.5 mm
Supply pipe 11: 187 mm in inner diameter
Heating target fluid inlet 12: a pipe having an inner diameter of 151 mm and a length of 300 mm and connected to an end portion of the supply pipe 11
Umbrella-shape distribution plate 20: 3,190 mm in diameter at a bottom surface and 920 mm in height

The amount of the ore slurry 1 to be supplied to the supply pipe 11 was set to range from 200 to 420 m³/h. The properties of the ore slurry 1 are given in Table 1.

**[Table 1]**

| | |
|---|---|
| Solid concentration [% by mass] | 20 to 50 |
| Average particle diameter of solid [mm] | < 2.0 |
| Ni concentration [% by mass] | 0.5 to 2.5 |
| Co concentration [% by mass] | 0.01 to 0.20 |
| Fe concentration [% by mass] | 20 to 60 |
| Si concentration [% by mass] | 1 to 10 |
| Mg concentration [% by mass] | 1 to 10 |
| pH | 3 to 7 |

### (Working Example 1)

Among a plurality of umbrella-shape distribution plates 20 provided to the countercurrent direct-heating heat exchanger, three umbrella-shape distribution plates 20 arranged in a top layer, in a second layer, and in a third layer were designed to have downstream edge portions 21 formed into a sawtooth shape. The downstream edge portion 21 of the other umbrella-shape distribution plate 20 was formed into a linear shape. The countercurrent direct-heating heat exchanger was operated for half a year under this condition.

As a result, the amount of the water vapor 2 used as the heating medium 2 was 97.6 kg/m³ on average.

The amount of the used water vapor 2 is an amount required for heating the ore slurry 1 to an intended temperature and is calculated as the amount of the water vapor 2 [kg/h] supplied per unit amount of the ore slurry 1 [m³/h] to be supplied. The countercurrent direct-heating heat exchanger is controlled so as to heat the ore slurry 1 to the intended temperature. This control is executed by increasing and reducing the amount of the ore slurry 1 to be supplied, with the amount of the water vapor 2 to be supplied (the amount of water vapor to be supplied per unit time) to the countercurrent direct-heating heat exchanger set at a constant amount.

### (Working Example 2)

Among the plurality of umbrella-shape distribution plates 20 provided to the countercurrent direct-heating heat exchanger, the umbrella-shape distribution plate 20 arranged in the top layer was designed to have the downstream edge portion 21 formed into a sawtooth shape. The downstream edge portions 21 of the other umbrella-shape distribution plates 20 were formed into a linear shape. The countercurrent direct-heating heat exchanger was operated for half a year under this condition.

As a result, the amount of the used water vapor 2 was 98.5 kg/m³ on average.

### (Working Example 3)

Among the plurality of umbrella-shape distribution plates 20 provided to the countercurrent direct-heating heat exchanger, the umbrella-shape distribution plate 20 arranged in the third layer was designed to have the downstream edge portion 21 formed into a sawtooth shape. The downstream edge portions 21 of the other umbrella-shape distribution plates 20 were formed into a linear shape. The countercurrent direct-heating heat exchanger was operated for half a year under this condition.

As a result, the amount of the used water vapor 2 was 98.9 kg/m³ on average.

### (Comparative Example 1)

All of the plurality of umbrella-shape distribution plates 20 provided to the countercurrent direct-heating heat exchanger were designed to have the downstream edge portions 21 formed into a linear shape. The countercurrent direct-heating heat exchanger was operated for half a year under this condition.

As a result, the amount of the used water vapor 2 was 101.5 kg/m³ on average.

### (Comparative Example 2)

All of the plurality of umbrella-shape distribution plates 20 provided to the countercurrent direct-heating heat exchanger were designed to have the downstream edge portions 21 formed into a linear shape. With the amount of the water vapor 2 to be used fixed at 98.0 kg/m³, the temperature of the resultant ore slurry 1 was lower than the intended temperature by a degree from about 2 to about 3°C.

As understood from above, using the umbrella-shape distribution plate 20 having the downstream edge portion 21 of a sawtooth shape (Working Examples 1 to 3) was confirmed to be capable of reducing the amount of the used water vapor 2, compared to using the umbrella-shape distribution plate 20 having the downstream edge portion 21 of a linear shape (Comparative Examples 1 and 2). Specifically, Working Examples were confirmed to achieve a higher degree of heat exchange efficiency than Comparative Examples.

The amount of the used water vapor 2 in Working Example 1 is smaller than the corresponding amounts used in Working Examples 2 and 3. In this way, a larger number of the umbrella-shape distribution plates 20 having the downstream edge portions 21 of a sawtooth shape was confirmed to achieve a higher degree of heat exchange efficiency.

The amount of the used water vapor 2 in Working Example 2 is smaller than the corresponding amount used in Working Example 3. In this way, providing the umbrella-shape distribution plate 20 having the downstream edge portion 21 of a sawtooth shape in an upper layer was confirmed to achieve a higher degree of heat exchange efficiency.

### Reference Sings List

- A, C: Countercurrent direct-heating heat exchanger
- 1: Ore slurry
- 2: Water vapor
- 10: Container
- 11: Supply pipe
- 12: Heating target fluid inlet
- 13: Heating target fluid outlet
- 14: Heating medium inlet
- 15: Heating medium outlet
- 20: Umbrella-shape distribution plate
- 21: Downstream edge portion
- 22: Tooth
- 30: Annular flow guide plate
- 31: Downstream edge portion
- 32: Tooth
- 40: Tilted plate
- 41: Downstream edge portion
- 42: Tooth

## Claims

1. A countercurrent direct-heating heat exchanger that exchanges heat by flowing a heating target fluid and a heating medium in opposite directions and making the heating target fluid and the heating medium contact each other directly, the countercurrent direct-heating heat exchanger comprising:
a container;
a heating target fluid inlet provided at an upper part of the container and from which the heating target fluid is supplied;
a heating target fluid outlet provided at a lower part of the container and from which the heating target fluid is discharged;
a heating medium inlet provided at a lower part of the container and from which the heating medium is supplied;
a heating medium outlet provided at an upper part of the container and from which the heating medium is discharged; and
one or a plurality of tilted plates provided in the container and each having a downstream edge portion from which the heating target fluid drops down, wherein
the downstream edge portion or the downstream edge portions of one, some, or all of the tilted plates are each provided with a plurality of teeth.

2. The countercurrent direct-heating heat exchanger according to claim 1, wherein the downstream edge portion or the downstream edge portions of one, some, or all of the tilted plates are each formed into a sawtooth shape.

3. The countercurrent direct-heating heat exchanger according to claim 1, wherein the downstream edge portion of a tilted plate out of the plurality of tilted plates and arranged in a top layer is provided with a plurality of teeth.

4. The countercurrent direct-heating heat exchanger according to claim 1, wherein
some of the plurality of tilted plates are a plurality of umbrella-shape distribution plates and the other of the plurality of tilted plates are a plurality of annular flow guide plates,
the umbrella-shape distribution plates and the annular flow guide plates are arranged alternately, one above the other, with the respective centers being substantially aligned with each other, and
the downstream edge portion or the downstream edge portions of one, some, or all of the umbrella-shape distribution plates are each provided with a plurality of teeth.

5. The countercurrent direct-heating heat exchanger according to claim 4, wherein the downstream edge portion or the downstream edge portions of one, some, or all of the umbrella-shape distribution plates are each formed into a sawtooth shape.

6. The countercurrent direct-heating heat exchanger according to claim 4, wherein the downstream edge portion of an umbrella-shape distribution plate out of the plurality of umbrella-shape distribution plates and arranged in a top layer is provided with a plurality of teeth.

7. The countercurrent direct-heating heat exchanger according to claim 1, wherein
some of the plurality of tilted plates are a plurality of umbrella-shape distribution plates and the other of the plurality of tilted plates are a plurality of annular flow guide plates,
the umbrella-shape distribution plates and the annular flow guide plates are arranged alternately, one above the other, with the respective centers being substantially aligned with each other, and
the downstream edge portion or the downstream edge portions of one, some, or all of the annular flow guide plates are each provided with a plurality of teeth.

8. The countercurrent direct-heating heat exchanger according to claim 7, wherein the downstream edge portion or the downstream edge portions of one, some, or all of the annular flow guide plates are each formed into a sawtooth shape.

9. The countercurrent direct-heating heat exchanger according to claim 2, wherein the teeth forming the downstream edge portion in a sawtooth shape each have a depth from 20 to 30 mm.

10. The countercurrent direct-heating heat exchanger according to claim 1, wherein the heating target fluid has viscosity.

11. The countercurrent direct-heating heat exchanger according to claim 1, wherein the heating target fluid is an ore slurry having a solid concentration of 20% by mass or more.
